# EUROPEAN PATENT APPLICATION

(11) **EP 4 768 720 A1**
(43) Date of publication of application: **01.07.2026**
(21) Application number: 25864552.2
(22) Date of filing: 12.03.2025
(51) Int. Cl.: F03D 80/00, B23K 7/00

(54) **SYSTEM FOR DISMANTLING CYLINDRICAL METAL TOWERS AND WIND TURBINES, BY MEANS OF FELLING, VIA REMOTE CONTROL, AND DISMANTLING METHOD**

(71) Applicant: Demolición y Descontaminación, S.L., 28110 Algete (ES)
(72) Inventor: GARCIA ALONSO, Adolfo, 28110 Algete (ES)
(74) Representative: Pons IP
(86) International application number: PCT/ES2025/070130
(87) International publication number: WO 2026/074213

(57) **Abstract**

The present invention relates to a system comprising:
- a guide rail (2) arranged around a tower (1) and attached to it by removable means,
- cutting means (6) running along the guide rail (2) and having means for projecting a combustible mixture and a spark igniter (9),
- a motor (10) responsible for moving the cutting means along the guide rail (2),
- means for assisted pulling of the column or tower to direct the fall,
- means for remotely viewing the cutting process,
- a remote control centre (23).

Given the features described above, the risks, the complexity of permits and works, and high costs can be reduced.

## Description

### OBJECT OF THE INVENTION

An object of the present invention, as stated by the title of the invention, relates to a system for the remote-controlled collapsible dismantling of cylindrical section metal towers and windmills, as well as a dismantling method carried out with the collapsible system.

The present invention is characterised by the special construction features of the demolition system and the nature and functionality of each of the elements forming part of the dismantling system, allowing demolition to be carried out in a simple, fast and safe manner.

Therefore, the present invention falls within the field of cylindrical section metal structures or towers and wind turbines and in particular the means used for their demolition.

### BACKGROUND OF THE INVENTION

Spain is the fifth country in terms of wind power, with an installed capacity of 30,810 MW, where
27% of the installed capacity is nearing the end of its useful life, and Spain, together with Portugal and Denmark, are at the forefront of wind farm ageing.

Many wind farms are starting repowering in order to install more modern, efficient and powerful machines; however, to achieve repowering they need to dismantle existing wind farms.

Dismantling can be carried out in different ways. A first known way is dismantling with a crane. However, there are several drawbacks to this way of dismantling:
- difficult crane access
- dismantling by sections
- risk of suspended loads
- risk due to work at a height
- high environmental impact
- long execution time
- considerable costs

Another way of dismantling is through the use of explosive charges. However, this way of dismantling also has the following drawbacks:
- additional time is required for permits
- the technical difficulty of an individualised study of charges
- limitation in the field of application
- intimidating technique
- considerable environmental impact
- complexity in obtaining permits

Therefore, an object of the present invention is to overcome the drawbacks of the current ways of dismantling by developing a dismantling system, which reduces the associated risks and the environmental impact, as well as the complexity of permits and works and high costs by developing a system such as the one described below and set out in its essential nature in claim 1.

### DESCRIPTION OF THE INVENTION

The object of the present invention is a system for the remote-controlled collapsible dismantling of cylindrical section metal towers and windmills, as well as a dismantling method that uses the system of the invention.

The dismantling system allows the cylindrical metal towers to be collapsed by remote control, ensuring that this action is performed in a manner that is more efficient, faster, safer, more sustainable and more economical than other ways of dismantling.

In order to achieve these aims, the collapsible dismantling system comprises:
- a guide rail arranged on the perimeter around a cylindrical surface, post - column
   - tower, and attached to it by removable means, preferably positioned close to the base,
- cutting means running along the guide rail, said cutting means having means for projecting a combustible mixture and a spark igniter,
- a remotely driven motor in connection with a control centre, where the motor is responsible for moving the cutting means along the guide rail,
- means for supporting the column or tower while cutting is carried out,
- means for remotely viewing the cutting process,
- a remote control centre.

In one possible embodiment, the means for projecting the combustible mixture comprises an oxy-fuel cutting nozzle downstream of a gas mixing zone to which three hoses are connected: a first hose for supplying preheat oxygen, a second hose for supplying cutting oxygen, and a third hose for supplying a gas.

In one possible embodiment, a cutting speed control and a manual selector of the cutting feed direction are provided associated with the motor.

In one possible embodiment, the spark igniter has a high-frequency module and a supply hose for supplying a combustible gas for the spark igniter.

In one possible embodiment, the remote viewing means comprises a chamber associated with a protective glass that allows the chamber to be protected and said chamber in turn allows observing and transmitting the image of the cutting that is taking place.

Oxy-fuel cutting is an auxiliary welding process, which solves the cutting of metal parts by means of local combustion and the continuous presence of a stream of oxygen.

Steel in the atmosphere, at room temperature and under normal conditions undergoes a slow, non-combustible oxidation process, due to the fact that the proportion of oxygen in the atmosphere is approximately 20%. However, if this oxidation is carried out at a temperature that reaches the combustion temperature of steel (approximately 870°) and under an oxygen atmosphere (above 88%), this oxidation becomes combustible.

Therefore, in order to apply oxy-fuel cutting of metal, there must be heating (oxidising) under a suitable atmosphere (pure oxygen projection), thus achieving a "violent" burn that results in oxy-fuel cutting.

The method for dismantling wind turbine towers using the system described above comprises the following steps:
- Driving the supply of the combustible mixture to the cutting means,
- Driving the progressive movement of the cutting assembly along the entire perimeter of the column or tower,
- Steering and releasing the support slings in order to guide the column or tower to the desired location.

### DESCRIPTION OF THE FIGURES

As a complement to the description provided herein, and for the purpose of helping to make the features of the invention more readily understandable, in accordance with a preferred practical exemplary embodiment thereof, said description is accompanied by a set of drawings which, by way of illustration and not limitation, represent the following.
Figure 1 shows a figure of the main elements forming part of the dismantling system.
Figure 2 shows a detail of the cutting means used.
Figure 3 shows the cutting assembly of the dismantling system in more detail.
Figure 4 shows a different view of the motor used to move the cutting assembly and the associated motor control means.
Figure 5 shows in detail how the tower is held in place during cutting.
Figure 6 shows a schematic representation of the whole system showing how the control of the cutting process is remotely controlled from a remote control centre.

### PREFERRED EMBODIMENT OF THE INVENTION

In light of the figures, a preferred embodiment of the proposed invention is described below.

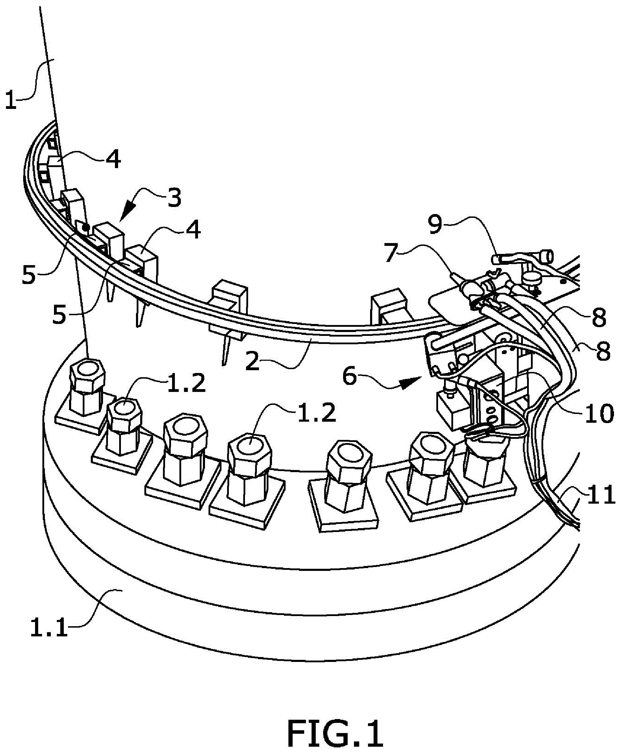

Figure 1 shows that the system for the dismantling of cylindrical metal towers comprises:
- a guide rail (2) arranged on the perimeter around a post or column or tower (1) and attached to it by removable means, preferably positioned close to the base.
- cutting means (6) running along the guide rail (2), said cutting means (6) having means for projecting a combustible mixture;
- a remotely driven motor (10) in connection with a control centre (not shown)

The column or tower (1) is anchored to the ground on a base or support (1.1), on which the lower end of said column or tower (1) is fixed to the base or support (1.1) by means of bolts and nuts (1.2).

In one possible embodiment, the guide rail (2) is a toothed rail.

The guide rail (2) is attached to the column or tower (1) by means of removable fixing means (3), said fixing means preferably but not limited to magnets or magnetic means (4) fitted with a plate (5) on which the guide rail (2) is fixed.

Associated with the oxy-fuel cutting nozzle (7) is a spark igniter (9) responsible for igniting the combustible mixture supplied through the oxy-fuel cutting nozzle (7).

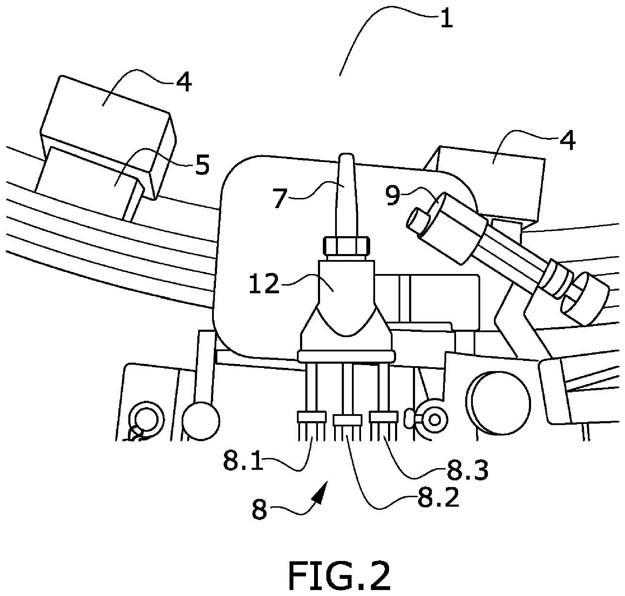

Figure 2 shows the elements forming part of the cutting assembly in more detail, which comprises a gas mixing zone (12) to which three hoses are connected: a first hose (8.1) for supplying preheat oxygen, a second hose (8.2) for supplying cutting oxygen, and a third hose (8.3) for supplying a gas, preferably propane. The gas mixing zone (12) is connected to the oxy-fuel cutting nozzle (7) which projects the flame directly onto the tower structure.

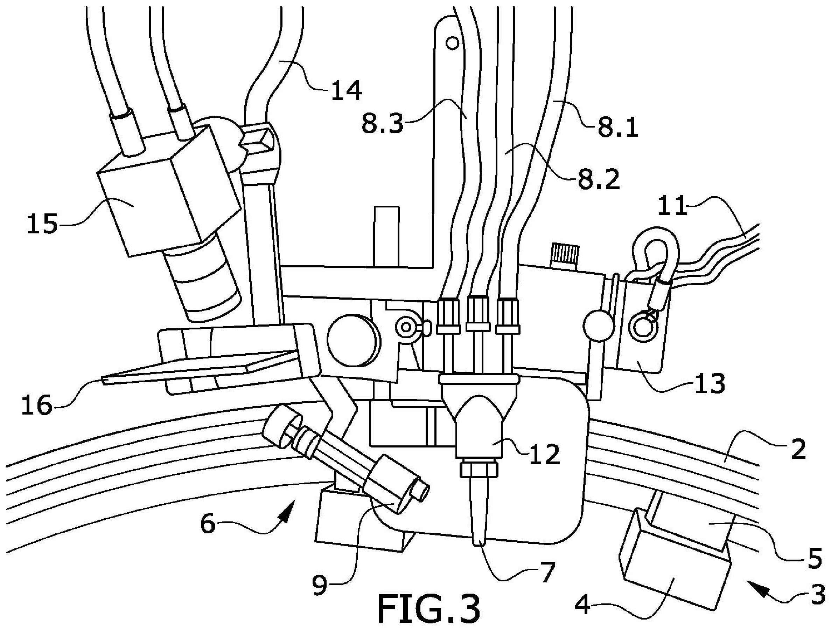

Figure 3 shows additional elements of the cutting system not shown in the previous figures, such as a high-frequency module (13) of the spark igniter (9) (figure 2), a supply hose for supplying a combustible gas (14) for the spark igniter (9), as well as a chamber (15) associated with a protective glass (16) that protects the chamber and said chamber in turn allows observing and transmitting the image of the cutting that is taking place.

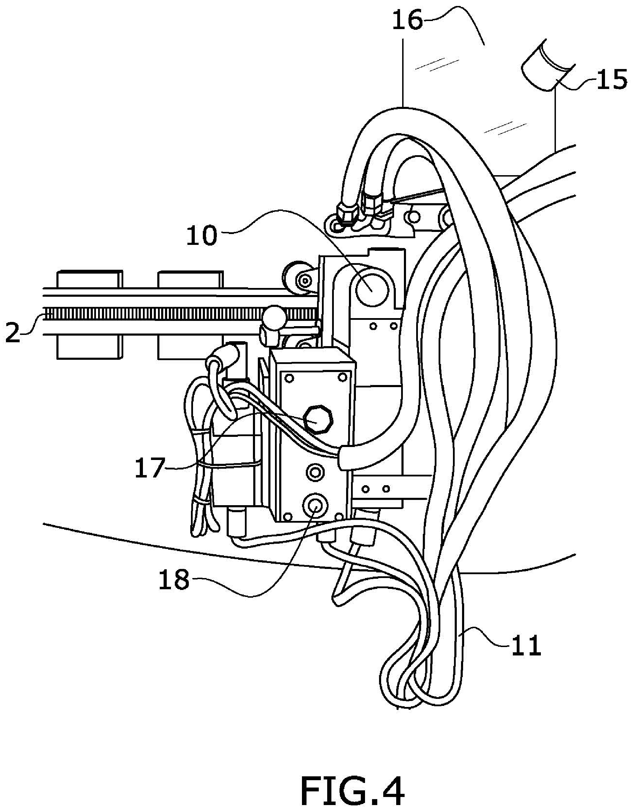

Figure 4 shows the control elements associated with the motor (10), which are, on the one hand, a cutting speed control (17) and a manual selector of the cutting feed direction (18).

The motor (10) is driven remotely, either wirelessly or by wiring (11) from a control station, not shown in the figures and positioned so as to avoid any possible risk of impact.

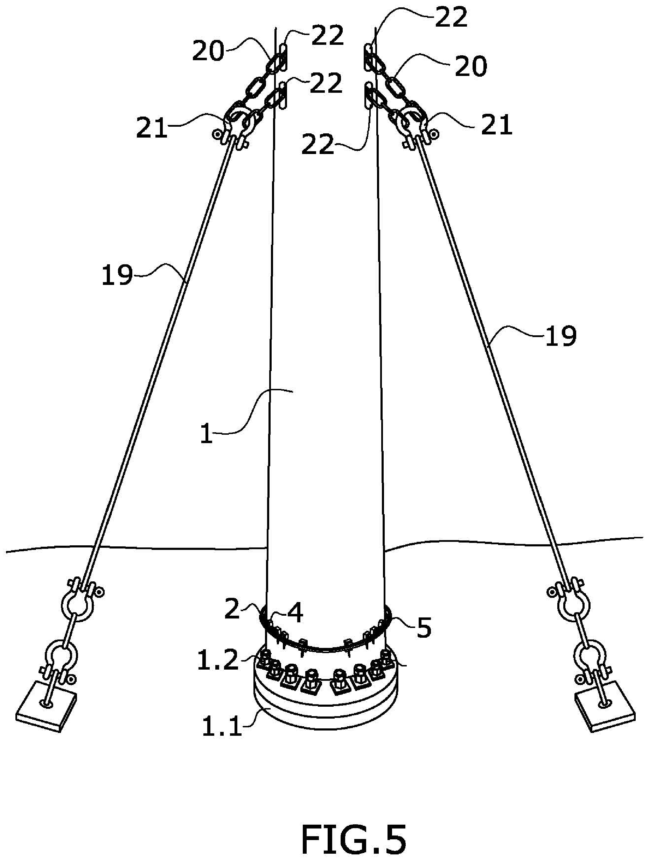

Lastly, figure 5 shows the additional complementary means used to keep the tower in an upright position and be able to carry out all the cutting, wherein in the embodiment shown, said means comprise slings (19) attached at one end to the ground and at the opposite end to means anchored to the towers, said slings being remotely releasable from their joining to the towers (1), said slings having the function of pulling the tower (1) during the collapsing phase.

The means for joining the slings to the towers (1) in the embodiment shown consist of the use of chains (20) which pass through windows (22) in the towers and where the free ends of the chains (20) are joined to the end of each sling (19) by means of a releasable shackle (21).

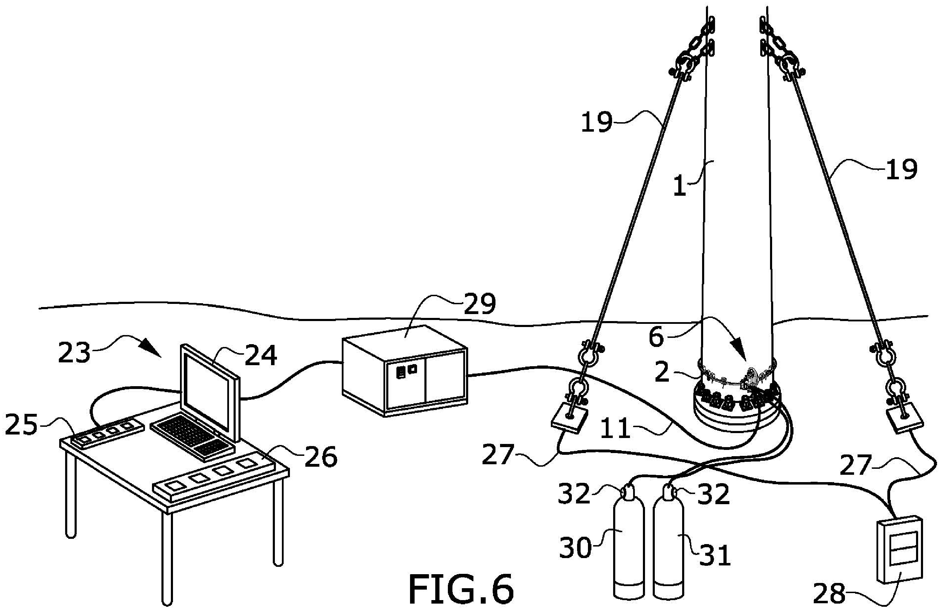

Figure 6 shows a remote control centre (23) from which the entire cutting and dismantling process is remotely controlled, said remote control centre (23) being linked to the cutting means (6).

The remote control centre (23) comprises:
- a screen (24) from which the cutting process can be viewed remotely;
- a cable control unit (25) which is joined by wiring to a switchboard (29) and which in turn is joined by wiring (11) to the cutting means (6);
- a wireless control unit (26);
- a control cable actuator (28) acting on the control cables (27) of the slings (19), which have the function of pulling the tower for the collapsing phase.

In addition, said figure 6 shows oxygen (30) and propane (31) cylinders controlled by valves (32).

Having thus adequately described the nature of the present invention, as well as how to put it into practice, it must be noted that, within its essential nature, the invention may be carried out according to other embodiments differing in detail from that set out by way of example, which the protection sought would equally cover, provided that the fundamental principle thereof is not altered, changed or modified.

## Claims

1. A system for the collapsible dismantling of cylindrical metal towers and windmills, **characterised in that** it comprises:
- a guide rail (2) arranged on the perimeter around a post or column or tower (1) and attached to it by removable fixing means (3), preferably positioned close to the base,
- cutting means (6) running along the guide rail (2), said cutting means (6) having means for projecting a combustible mixture and a spark igniter (9),
- a remotely driven motor (10) in connection with a control centre, where the motor (10) is responsible for moving the cutting means along the guide rail (2),
- means for supporting the column or tower while cutting is carried out,
- means for remotely viewing the cutting process,
- a remote control centre (23).

2. The system for the collapsible dismantling of cylindrical metal towers and windmills according to claim 1, **characterised in that** the removable means used to attach the guide rail (2) to the column or tower (1) comprise magnets or magnetic means (4) fitted with a plate (5) on which the guide rail (2) is fixed.

3. The system for the collapsible dismantling of cylindrical metal towers and windmills according to claim 1 or 2, **characterised in that** the guide rail (2) is a toothed rail.

4. The system for the collapsible dismantling of cylindrical metal towers and windmills according to any of the preceding claims, **characterised in that** the means for projecting the combustible mixture comprise an oxy-fuel cutting nozzle (7) downstream of a gas mixing zone (12) to which three hoses are connected: a first hose (8.1) for supplying preheat oxygen, a second hose (8.2) for supplying cutting oxygen, and a third hose (8.3) for supplying a gas.

5. The system for the collapsible dismantling of cylindrical metal towers and windmills according to any of the preceding claims, **characterised in that** a cutting speed control (17) and a manual selector of the cutting feed direction (18) are provided associated with the motor (10).

6. The system for the collapsible dismantling of cylindrical metal towers and windmills according to any of the preceding claims, **characterised in that** the spark igniter (9) has a high-frequency module (13) and a supply hose for supplying a combustible gas (14) for the spark igniter (9).

7. The system for the collapsible dismantling of cylindrical metal towers and windmills according to any of the preceding claims, **characterised in that** the remote viewing means comprise a chamber (15) associated with a protective glass (16) that protects the chamber and said chamber in turn allows observing and transmitting the image of the cutting that is taking place.

8. The system for the collapsible dismantling of cylindrical metal towers and windmills according to any of the preceding claims, **characterised in that** the remote control centre (23) comprises:
- a screen (24) from which the cutting process can be viewed remotely;
- a cable control unit (25) which is joined by wiring to a switchboard (29) and which in turn is joined by wiring (11) to the cutting means (6);
- a wireless control unit (26);
- a control cable actuator (28) acting on the control cables (27) of the slings (19).

9. A method for collapsible dismantling of cylindrical metal towers and windmills using the collapsible dismantling system according to any of claims 1 to 8, **characterised in that** it comprises the steps of:
- driving the supply of the combustible mixture to the cutting means,
- driving the progressive movement of the cutting assembly along the entire perimeter of the column or tower,
- falling induced by controlled pulling, directing the fall with assisted pulling by means of slings or support winches to the desired location, driven by a dual method for safety: by cable and by remote control.
